# EUROPEAN PATENT SPECIFICATION

(11) **EP 1 091 858 B1**
(45) Date of publication and mention of the grant of the patent: **19.06.2002**
(21) Application number: 98933009.7
(22) Date of filing: 29.06.1998
(51) Int. Cl.: B60C 15/036, B60C 17/04, B60C 9/02, B60C 15/00, B60C 5/14, B29D 30/08

(54) **INTEGRAL TIRE WHEEL ASSEMBLY**
INTEGRIERTE REIFEN/FELGEN-EINHEIT
ENSEMBLE ROUE ET BANDAGE INTEGRES

(43) Date of publication of application: 18.04.2001
(73) Proprietor: THE GOODYEAR TIRE & RUBBER COMPANY, Akron, Ohio 44316-0001 (US)
(72) Inventor: VANNAN, Frederick, Forbes, Jr., Clinton, OH 44216 (US)
(74) Representative: Leitz, Paul
(86) International application number: US9813625
(87) International publication number: WO0000358

(56) References cited:
- DE-A- 2 157 076
- DE-A- 3 601 316
- DE-A- 19 537 395
- GB-A- 794 779
- GB-A- 1 514 183
- US-A- 4 085 786
- US-A- 4 166 883

## Description

### Technical Field

The present invention relates to an improved tire design and construction which facilitates the tire manufacturing process and eliminates at least one of the traditional tire beads. More particularly, the invention relates to an improved tire and rim assembly design which provides vehicle mobility when the tire has zero inflation pressure.

### Background of the Invention

A typical tire 100 is designed with two steel beads 124, one or more plies 132, two sidewalls 116, 118, two chafers or toeguards 160, two or more belts 136 and one tread 112.

A typical runflat tire 200 designed to operate with zero inflation pressure generally has all of the components in a typical pneumatic tire plus additional rubber, textile or wire reinforcements 142 in the sidewall area 116. These additional sidewall reinforcements in combination with the carcass structure are generally designed to carry the vehicle load in compression when the tire inflation pressure is zero.

Tires 100, 200 are typically mounted on wheels using equipment to fit the bead area of the tire over the rim flange. Safety humps are provided on most rims to keep the tire beads properly seated on the rim.

Runflat tires 200 are typically designed with beads 124 that fit more tightly to the rim than non-runflat tires 100. The tighter fitting tire beads 124 are designed to maintain proper seating of the beads on the rim during runflat operation.

Numerous methods of manufacturing tires are used in the industry. Most methods involve the use of a building drum or mandrel which can be collapsed after the tire is assembled to enable the assembled tire to be removed from the assembly drum.

Some tires are assembled on segmented cores which may be removed after assembly or used in the vulcanization process. If cores are used in tire vulcanization, they must be removed before the tire is put into service.

The typical tire vulcanization process involves an elastomeric curing bladder, which is expanded inside the unvulcanized tire. Normally, steam or hot water is forced into the bladder to press the unvulcanized tire against a mold which forms the outside shape of the vulcanized tire.

When the tire vulcanization process is completed, the curing bladder is collapsed and removed from the finished tire.

US-A-4 085 786 and US-A- 4,110,141, considered as closest prior art for independent claims 1, 8 and 9, disclose an integral tire and rim assembly in which the tire is built and cured on the rim. The tire is a closed torus crown overlap type, having a pair of annular inextensible beads.

US-A- 4,892,129 discloses a tire unit consisting of a coreless air tire, containing a reinforcing ply and a rim, the edges of which are permanently connected to one another solely by bonding.

### Objects and Summary of Invention

It is an object of the present invention to provide an integral tire and wheel assembly 1 which can operate without inflation pressure. Since the tire 10 and wheel 20 are preferably integrally attached to each other, the tire bead cannot become unseated during runflat operation.

It is another object of this invention that the rim 20 be designed to facilitate runflat operation. This may be accomplished increasing the diameter DR of the center portion 20A of the rim 20, the part under the tire tread 12, to limit the deflection of the uninflated tire. The center rim diameter DR would be small enough that during normal inflated service, the crown area 13, the part of the tire 10 directly under the tread, does not contact the center portion 20A of the rim 20. This would permit reduction in materials of the sidewalls 16, 18 of the tire 10 improving inflated ride quality, reducing rolling resistance and cost.

It is another object of the invention that the traditional process of mounting tires 100 on wheels would be eliminated since the tire 10 and wheel 20 can be integrally attached during manufacture.

Another object of the invention is improved ride and uniformity of the tire/wheel assembly 1 as tire 10 to wheel 20 clearances are eliminated or at least substantially reduced.

A further object of the invention is that the wheel or rim 20 replace the building drum in the manufacturing process. One advantage of this process change is that building drums or mandrels are eliminated from the tire manufacturing process. Since the new design rim 20 could be one piece and does not have to be removed from the tire 10, a new high level of precision is achieved when the tire 10 is molded onto the rim 20.

Another object of the invention is that the rim replaces the center mechanism of a traditional curing press and the curing medium is introduced through the valve 30 hole 60 attached in the rim 20.

Still another object of the invention is that at least one embodiment of the invention the tire to rim attachment end 40 of the tire 10 is radially expandable. This would permit the manufacture of the tire 10 separate from the rim 20. The radially expandable tire to rim attachment end 40 could be stretched over the rim center portion 20A and clamped in place. This concept significantly simplifies tire manufacture over the tradition process and still provides the runflat benefits from the enlarged center portion 20A of the rim 20.

The above objectives are achieved by a pneumatic tire 10, the tire 10 having an elastomeric tread 12 at least one reinforcing ply 32 radially inward of the tread 12 and a pair of annular radially inner tire to rim attachment ends 40. The reinforcing ply 32 may be in two parts which extend from one rim attachment end 40 to the opposite rim attachment end 40, the parts being split at the crown area 13 of the tire 10. The tire 10 is characterized by at least one of the rim attachment ends 40 being circumferentially and radially expansible. The at least one radially expansible rim attachment end 40 is preferably made from substantially elastomeric material. The at least one rim attachment end 40 has a minimal circumferential length L in the unloaded as molded condition. The minimal circumferential length L is expansible by an amount of at least 10 percent greater than L without permanent distortion of the rim attachment end 40.

The tire when attached to a rim creates a tubeless tire rim assembly 1 which has a rim 20 having a radially outer center portion 20A which acts as an annular building mandrel. The center portion 20A has a contoured exterior surface 21 having a predetermined circumferential length L_{R} and a contour width W_{R} substantially normal to the circumferential length L_{R}. The rim 20 has an orifice or hole 60 for injecting fluids or gases through the annular central portion 20A. The rim 20 further has a pair of rim flanges 42 or 44 for securing the radially inner tire attachment ends 40. The annular central portion 20A extends radially above the pair of tire attachment ends 40. When used in combination with the tubeless tires 10, the tubeless tire 10 has an air impervious liner 35 at least one reinforcing ply 32 having cords 31, the reinforcing ply 22 being preferably of two parts 32A, 32B. The cord length of each part 32A, 32B is preferably substantially equal to or less than the contour width W_{R} of the rim 20 and wherein the tire 10 is assembled on the rim 20 prior to curing the reinforcing ply. In order to manufacture the above-mentioned tire and rim assembly 1, the preferred method comprises the steps of providing a rim 20, the rim 20 having a tire building annular mandrel, hereinafter called the "center portion, the center portion 20A having a contour exterior surface 21 having a predetermined circumferential length L_{R} and a predetermined axial width W_{R}, and an orifice 60 for injecting fluids or gases; assembling a tire 10 subassembly 10A over the center portion 20 by applying an air impervious liner 35 adjacent to the contour exterior surface 21; applying at least one split reinforcing ply 32 having a first and second part 32A, 32B over the liner 35 and an annular center portion 20A; applying at least one pair of belt reinforcing structures 36 over the at least one split reinforcing ply 32; applying one or more elastomeric components such as the tread 12 and sidewall rubber 17 to the tire subassembly 10A; positioning the tire's subassembly 10A along a radially inner attachment end 40 of the at least one split reinforcing ply and liner adjacent to a radially inner end 42 of the center portion 20 of the rim; placing the tire assembly 1 in a mold 5; applying heat and pressure to the mold 5 and the tire assembly through the orifice 60 in the center portion 20A, expanding the tire subassembly 10A outwardly forcing the tire subassembly 10A into contact with the mold 5; curing the tire subassembly 10A on the rim 20; and removing the tire and rim assembly 1 from the mold 5.

### Definitions

"Runflat" - The condition of operating a vehicle with zero inflation air in at least one tire.

"Building drum" - A mandrel usually composed of metal, plastic and elastomeric components upon which a tire is assembled. It can expand and collapse as required.

"Cores" - Generally segmented solid mandrels used to assemble and sometime vulcanize tires.

"Curing" - The process of vulcanizing a tire.

"Curing bladder" - An elastomeric membrane which separates the curing medium from the inside of the tire.

"Tire/wheel mounting - The process of installing a tire on the wheel of a vehicle.

"Rim" - The outer part of a vehicle's wheel upon which tire is mounted..

"Beads" - The components of a typical tire whose purpose is to hold the tire on the wheel. Normally beads are circular about the diameter of the rim flange and made of steel.

"Bead area" - The area of a tire including and immediately surrounding the beads.

"Bead seating" - The figment of a tire's bead areas on the rim.

"Rim flanges" - The part on each side of the wheel which resist the inflation pressure trying to form the beads apart.

"Safety humps" - The parts on each side of the wheel which prevents the tire's beads from moving toward the tire's centerline unseating the bead.

### Brief Description of Drawings

FIGURE 1 is a cross-sectional drawing of a typical prior art high performance passenger tire 100 with the following components: innerliner 135 beads apexes 124, plies 132, toeguards 162, chafers 160, sidewalls 116, 118, belts 136, wedges 148 and tread 112.

FIGURE 2 is a cross-section of a typical runflat 200 passenger tire with the additional sidewall runflat inserts 142:

FIGURE 3 is a cross-sectional view of the tire/rim assembly 1 according to a first embodiment of the invention.

FIGURE 4 is a cross-sectional view of a tire/rim according to the second embodiment of the invention.

FIGURE 5 is a cross-sectional view of the tire and rim assembly according to a third embodiment of the invention prior to curing.

FIGURE 6 is the assembly of FIGURE 5 showing the tire/rim assembly being cured in a tire mold.

FIGURE 7 is the tire rim assembly of the present invention shown operated in the runflat or uninflated condition.

FIGURE 8 is a fourth alternative embodiment tire and rim assembly wherein the use of a third ply component 32C is shown.

### Detailed Description of the Invention

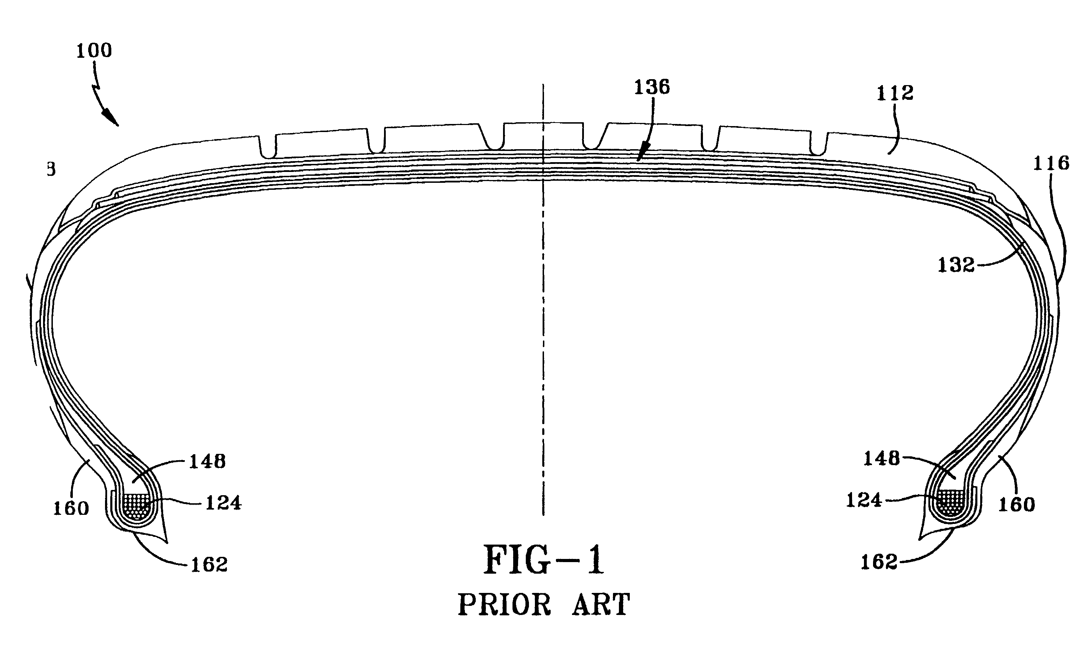

With reference to FIGURE 1, a prior art high performance tire 100 is shown having a relatively low aspect ratio. An aspect ratio is the ratio of the section width divided by the section height. When produced as a radial tire, these tires 100 have at least one ply 132 having parallel cords 133 oriented at an angle of approximately 90° relative to the equatorial plane of the tire 100. An air impervious innerliner 135 is radially inner of the ply 132 and acts as a barrier maintaining air between the tire 100 and the rim. The radial ply 132 is generally anchored or attached to one annular inextensible bead core 124 and then extends radially outwardly and around to an opposite annular bead core 124. Radially above the bead core 124 is an elastomeric wide insert 148. A toeguard 162 raps around the ply and a hard rubber chafer 160 is applied. In the area where the bead 124 is shown, this hard rubber chafer 160 provides a material to resist abrasion between the tire 100 and the rim. Radially outward of the chafer 160 is an elastomeric sidewall 116, 118 that extends out to the shoulder region of the tire 100. Radially outward of the carcass ply 132 is a belt reinforcing 136 structure generally comprising two or more layers 151, 152 of cord reinforced belt 5 having cords laying in an angle generally between 18° and 30°. In a high performance tire 100, radially outward of the belt structures can be a fabric overlay 138 as shown. Radially outward of the fabric overlay is the elastomeric tread 112. As shown in the figure at the belt edges, elastomeric wedges 139 may be used to assist in maintaining the belts 151, 152 relatively flat and provide additional vibration damping of the tire 100.

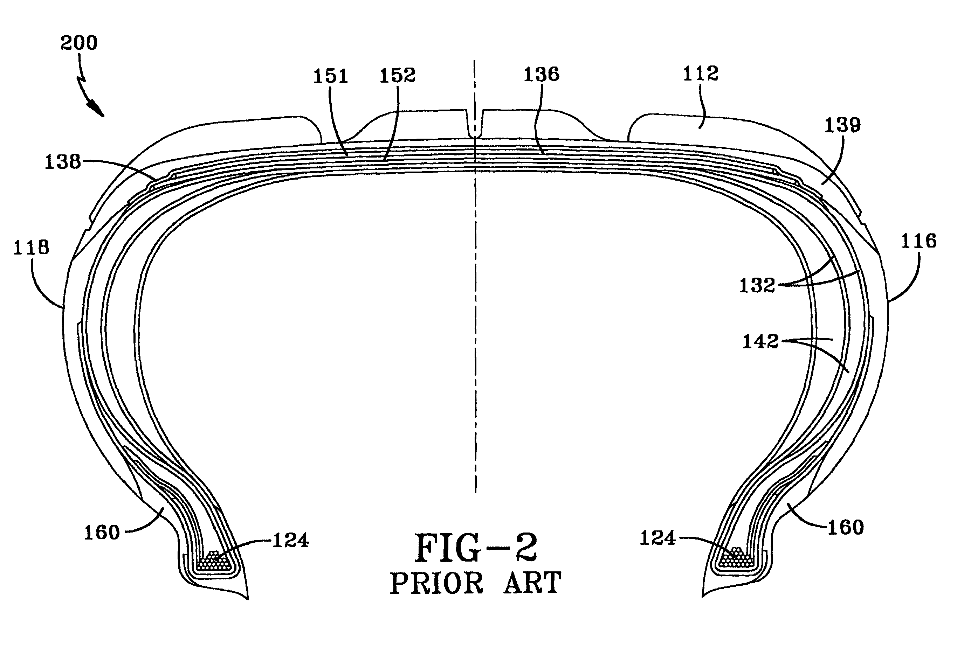

As shown in FIGURE 2, the tire 200 is substantially similar in construction to tire 100 but in a runflat design. That tire 200, in addition to having all the above components previously mentioned, additionally has one or more elastomeric insert fillers 142 radially inward of at least one ply member 132 as illustrated. The tire 200 shown has two carcass plies with one insert radially inward of each ply 132 and in each sidewall 116, 118 of the tire 200.

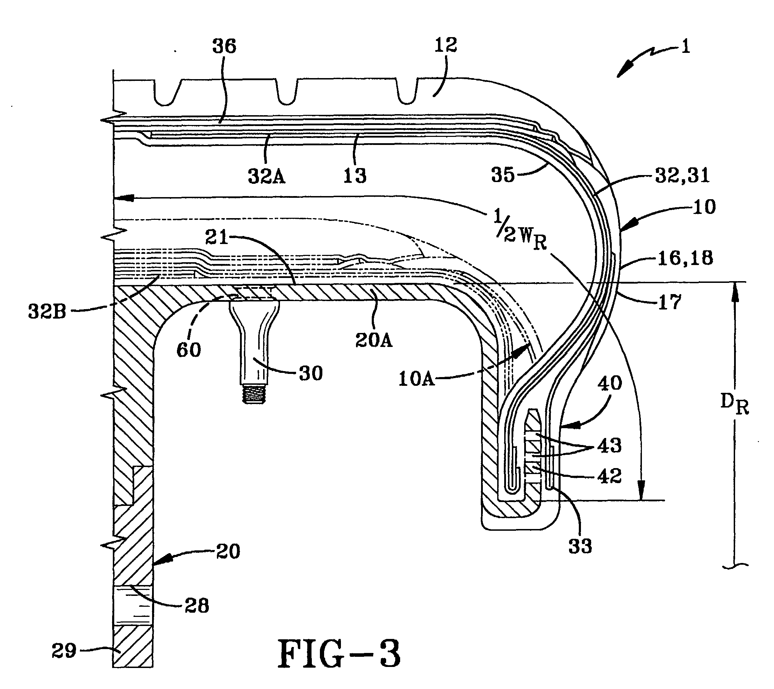

In each of the representative FIGURES 3, 4 and 5 of the first, second and third embodiment tire/rim assemblies 1 of the present invention, the dashed or broken lines represent the tire subassembly as it is built onto the center portion 20A of the rim, the solid lines represent the finished tire/rim assembly with the tire shown in a fully inflated condition.

As shown in FIGURE 3, the tire 10 according to the present invention is shown attached to a wheel/rim assembly 1. The tire 10 in the uncured state, uses the contour of the center portion 20A of the rim 20 as a building mandrel wherein the liner 35 is laid onto the contour center portion 20A then one or more plies 32 is attached radially above the liner, then a belt reinforcing structure 36 is applied comprising two or more layers 51, 52 of cord reinforced belt material. The cords of the belt layers preferably are initially oriented to about 45° adjacent layers oppositely oriented, when the tire is inflated the cords pantograph in the range of 18°to 27°; then a tread compound 12 is applied over the belt structure and a cap comprising a tread material and sidewall material integrally attached can be applied over the assembly 1 as shown. Further as shown, a valve stem 30 is shown extending through an opening or hole 60 in center portion 20A. Ideally the ply material 32 is inserted between a flange 42 on the rim 20 with the cap sidewall material 17 overlapping this flange 42. Additional ply fabric 33 can be used outward of the flange 42.

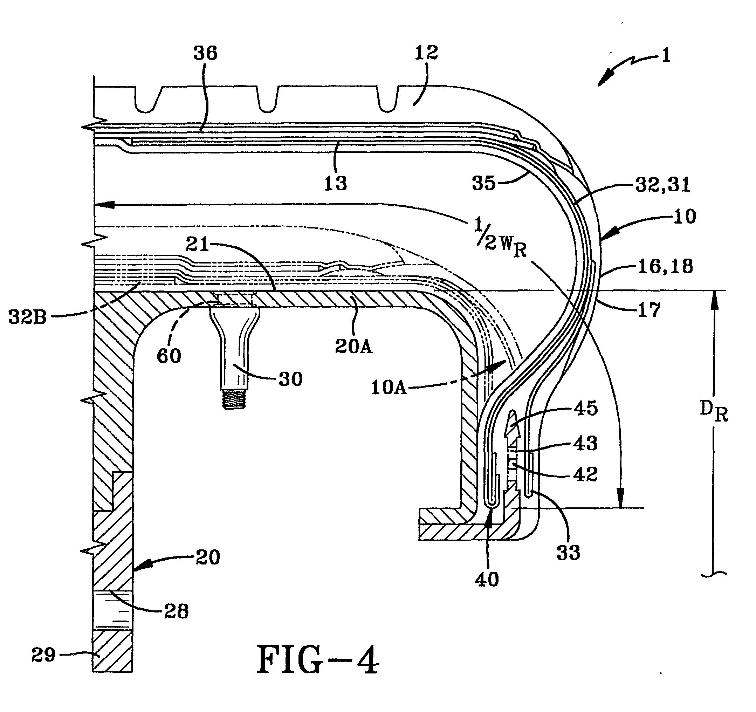

As shown in FIGURE 4, the tire/rim assembly 1 optionally can include an annular press fit flange 42 that would be attached to the green tire upon assembly and compress the liner and ply between the press fit flange 42 and the rim 20 as shown. This form of attachment will securely lock that portion of the tire in place.

As shown, the flanges 42 may include holes openings 43 to allow rubber to flow into to help secure the tire 10 to the rim 20. Additionally the flange 42 of FIGURE 4 included a protrusion 45 having an arrowhead-shaped feature as shown in cross-section; this also helps secure the tire 10 to the rim 20.

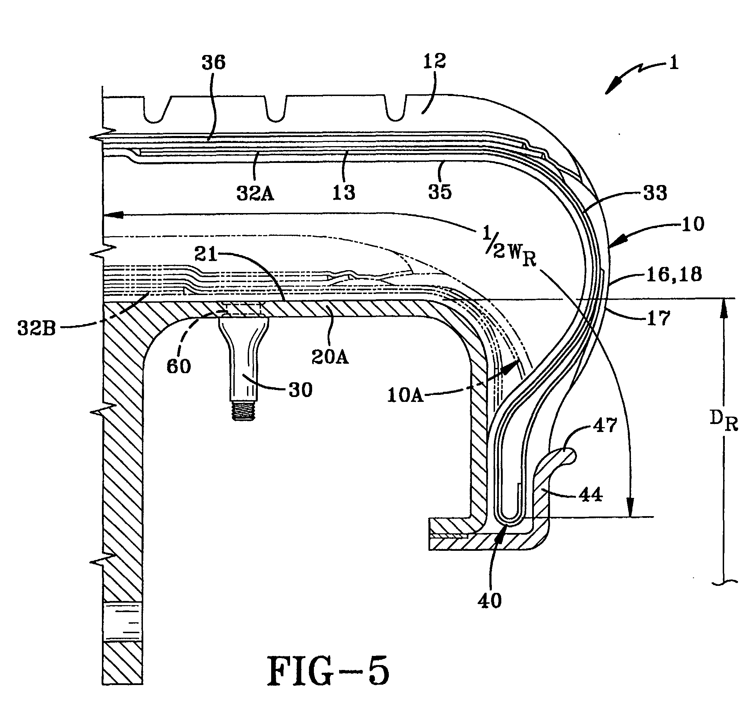

As shown in FIGURE 5, an alternative flange 44 is shown having a curved protrusion 47 at the radially outer end of the press fit annular ring. This protrusion provides additional adhesion surfaces for the sidewall rubber as the material flows. The resultant appearance is very similar to a conventional rim.

Furthermore, as shown in each embodiment of FIGURES 3 and 4, small annular holes can be provided to facilitate rubber flowing into these holes to further assist attachment. As shown in each of the assemblies 1, one of the tire sidewalls 16, or 18 or both has no bead core reinforcement. This facilitates the attachment of the tire 10 to the rim 20 during the building process. The opposite side of the tire 10 may include conventional annular bead core 24 or the tire 10 can be symmetrically manufactured with neither sidewall 16, or 18 having a bead core 20, but manufactured such that both sidewalls 16, or 18 are clamped to the rim flange 42, or 44 as shown.

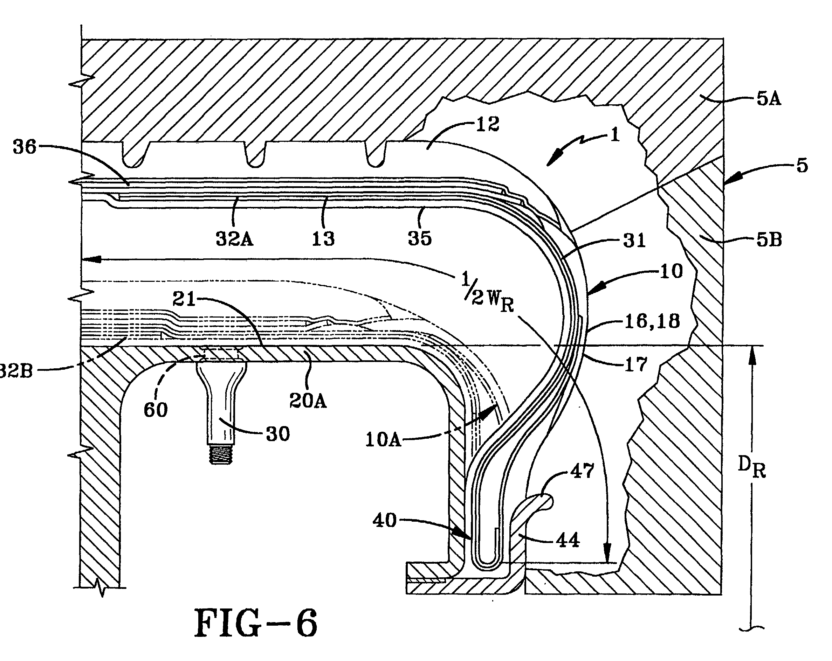

As shown in FIGURE 6, the tire/rim assembly 1 when placed in a mold and inflated with gasses, expands the tire into the mold 5, the mold having a tread pattern and as the material heats and flows around the mold, the tread pattern is imparted into the tire. As the tire cures, a completed tire/wheel assembly results as shown in FIGURE 5.

Such a tire 10 can be cured and then assembled and clamped onto the rim 20 in a secondary operation by simply removing the annular flanges 42, or 44 and stretching the flexible rim attachment ends 40 over the center portion 20A for proper assembly and then applying the compression fitting annular attachment flanges 42, or 44 as shown. Alternatively, and preferably, the tire/wheel assemblies 1 are integrally attached and would only be removed upon complete changeover of the tire/rim assembly 1. In other words, the vehicle's tire and rim assembly would be considered a one-piece unit. In the event of a repair, one would simply replace the entire subassembly 1 including tire and rim with a new tire and rim subassembly 1. These rims 20 would be reusable and sent back to the manufacturing facility wherein the annular flanges 42, or 44 would be removed from the assembly 1 and the tire 10 would be striped from the rim 20 and the rim 20 would be available to have a new tire 10 mounted to it. Preferably the rim would have a removable central disk 29 that would provide the bolt hole pattern 28 for attachment to a particular vehicle as shown in FIGURE 3.

With further reference to FIGURE 3, the ply 32 is preferably a split ply having a first part 32A and a second part 32B, the parts 32A and 32B when mounted on the center portion 20A of the rim 20 axially overlap as shown in dashed lines. Upon inflation during vulcanization, the parts 32A and 32B slide relative to one another allowing the tire to take the shape of the mold cavity of the mold 5, the mold having a tread forming portion 5A and a sidewall forming portion 5B, as shown in FIGURE 6. The ply cord length of the two parts is such that the sum can either slightly overlap or preferably are slightly gapped at the center plane of the tire 10. As shown, the radially inner end of the parts 32A and 32B are preferably plotted as shown.

In the preferred method of manufacture, the innerliner 35 may be partially or completely cured prior to assembly. The advantages of a precured innerliner 35 are that ply cords cannot pull through the liner 35. A second advantage is that the liner 35 has better dimensional uniformity when it is precured.

An alternative method of manufacturing the tire 10 onto the rim 20 is to only build the carcass onto the rim 10 in a first stage assembly and in a separate operation, after forming the carcass toroidally by inflating the assembly, applying the reinforcing belt structure 36 and tread rubber 12. In this alternative method of assembly, the belt layers can have the cord angles in the 17° to 27° range without the need to pantograph from an initial higher angle. This is so because the belt layers can be applied at the proper inflated diameter. Another method of assembly similar to that discussed above is to pre-assemble the belt structure 36 and the tread 12 as a separate subassembly and then attaching same to the inflated carcass and rim subassembly. The attachment of the belt structure 36 and tread 12 subassembly can occur in a tire mold wherein the tread and belt structure are applied or inserted into the mold first and then the carcass and rim subassembly is inserted and then inflated to contact the belt and tread subassembly. It is possible that the tread and/or belts can be precured and the mold 5 in that application may be smooth or absent of a tread pattern.

The use of a split ply 32A and 32B can further be complimented by the use of an additional ply 32C that is not fixed to or clamped to the rim flanges. The ply 32C upon inflation simply transverses outwardly away from the rim flanges.

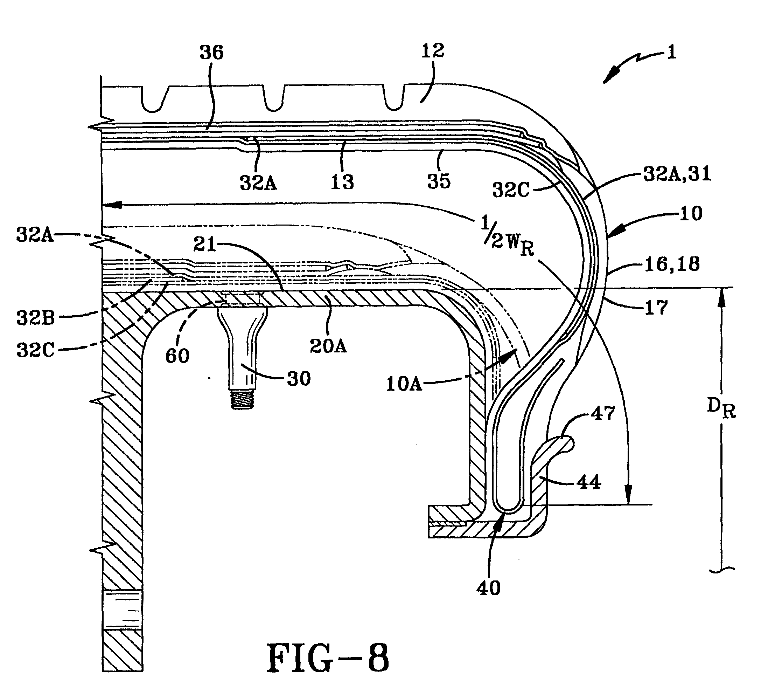

In one embodiment shown in FIGURE 8 tire 10 when used in combination with a ply 32C the split plies 32A and 32B act as flippers that fold up and are clamped by the rim flange while the ply 32C can be interposed between the ends of the plies 32A and 32B nor placed radially inward of the ply 32A or 32B. Upon inflation, the ply 32C slips radially outwardly maintaining contact with the split plies 32A and 32B as the tire reaches its inflated diameter.

To facilitate adequate control of the slipping of the tire 10 ply components and belt structure 36, it is recommended that a slip agent such as stearic acid be used as a coating between the various layers.

The cords of the ply portions 32A, 32B and 32C can be of any material commonly employed in a tire including but not limited to polyester, nylon, rayon, aramid or steel cords.

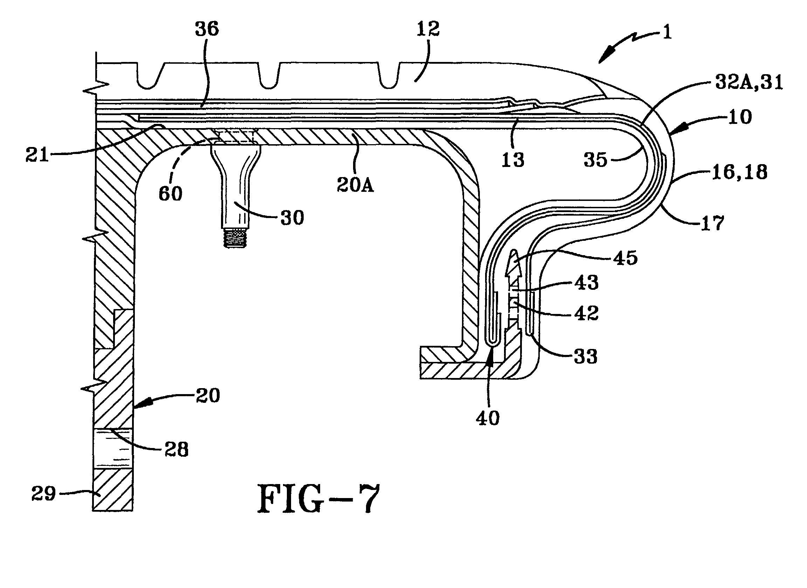

This type of manufacturing process permits the rim 20 to become the mandrel for tire building, greatly simplifying the building process of the pneumatic tire structure. Furthermore, as can be readily be appreciated, should the tire 10 become deflated for any reason, the rim 20 would act as a runflat device permitting the tire 10 to be run or the rim 20. This is shown in FIGURE 7 where the tire is operated in a deflated position.

While the tire will not provide the normal damping of a runflat tire 200 shown in FIGURE 2, it will provide sufficient stability and ride characteristics to enable the driver to easily drive to a repair facility where the tire/wheel assembly 1 can be simply removed and a new one replaced. Those of ordinary skill in the art will appreciate the various modifications to the above-inventive concept can be contemplated such as the addition of elastomeric layers of foam material to provide additional damping when the tires run in the runflat condition thereby providing damping rings for this condition. Furthermore, overlays and other materials conventionally used in tires 100 for high-speed performance can also be employed. What is most readily apparent about this inventive tire 10 is that the conventional heavy insert material 42 in the sidewalls 16, 18 that is used in runflat performance tires 20 is now eliminated resulting in the elastomeric tire 10 being of a highly efficient design in terms of weight and material.

## Claims

1. A pneumatic tire (10), the tire having an elastomeric tread (12), at least one reinforcing ply (32) radially inward of the tread (12) and a pair of annular radially inner rim attachment ends (40), the reinforcing ply (32) extending substantially from one rim attachment end (40) to the opposite rim attachment end (40), the reinforcement ply being a split ply having a first part (32A) and a second part (32B), the parts being split at the crown area of the tire, the first part (32A) and second part (32B) overlapping when mounted on the center portion (20A); **characterized in that** upon inflation during vulcanization the first part (32A) and second part (32B) of the at least one reinforcing ply (32) slide relative to one another allowing the tire to take the as molded shape.

2. The pneumatic tire (10) of claim 1, wherein the at least one reinforcing ply (32) has a third ply portion (32C), the third ply portion overlying the first part (32A) and the second part (32B) between the rim attachment ends.

3. The pneumatic tire (10) of claim 1, wherein there is an innerliner (35) radially inward of and adjacent to the at least one reinforcing ply.

4. The pneumatic tire (10) of claim 3, wherein the innerliner (35) is precured.

5. The pneumatic tire (10) of claim 1, wherein at least one rim attachment end (40) is circumferentially and radially expansible.

6. The pneumatic tire (10) of claim 5, wherein the at least one rim attachment end (40) is substantially elastomeric.

7. The pneumatic tire (10) of claim 5, wherein the at least one rim attachment end (40) has a minimum circumferential length L in the unloaded as molded condition, the minimum circumferential length being expandable by an amount of at least (10)% greater than said length L without permanent distortion of the rim attachment end (40).

8. A tubeless tire and rim assembly (1) comprising:
a rim (20) having a radially outer annular center portion (20A), the annular center portion (20A) having a contoured exterior surface (21) having a predetermined circumferential length LR and contour width WR substantially normal to the circumferential length LR, an orifice (60) for injecting fluids or gases, through the center portion (20A), a pair of radially inner rim flanges (42), the annular center portion (20A) extending radially above the pair of rim flanges (42);
a tubeless tire (10), the tubeless tire (10) having an air impervious liner (35), at least one reinforcing ply (32) a pair of radially inner rim attachment ends (40), and wherein the tire is assembled to the rim prior to curing, the at least one reinforcing ply (32) being a split ply extending from one tire attachment end (40) to the opposite tire attachment end (40), having a first part (32A) and a second part (32B), the parts being split at the crown area of the tire, the parts (32A) and (32B) when mounted on the center portion (20A) overlap, the tire and rim assembly (1) being **characterized in that** upon inflation during vulcanization the parts (32A) and (32B) slide relative to one another allowing the tire to take the as molded shape.

9. A method of building a tire and rim assembly, the method comprising the steps of:
providing a rim (20), the rim (20) having a tire building annular center portion (20A), the center portion (20A) having a contoured exterior surface (21) having a predetermined circumferential length LR and a predetermined axial and radial contour width WR, an orifice (60) for injecting fluids or gases;
assembling a tire subassembly over the center portion (20A) by applying an air impervious liner (35) adjacent to the contoured exterior surface (21);
applying at least one reinforcing ply layer (32) over the liner and annular center portion (20A), the at least one reinforcing ply layer being a split ply having a first part (32A) and a second part (32B), the parts (32A) and (32B) when mounted axially overlapping,
the method being **characterized in that** upon inflation during vulcanization the parts (32A) and (32B) slide relative to one another allowing the tire to take the shape of the mold cavity.

10. The method of building a tire and rim assembly of claim 9 comprising the steps of:
applying at least one pair of belt reinforcing structures (36) over the at least one reinforcing ply (32);
applying one or more elastomeric components to the tire subassembly (10A);
clamping the tire subassembly (10A), along a radially inner portion of the at least one reinforcing ply (32) and liner (35), to the annular center portion;
placing the tire rim assembly (1) in a mold (5);
applying heat and pressure to the mold 5 and tire rim assembly (1) through the orifice (60) in the annular center portion (20A), expanding the tire subassembly outwardly forcing the tire subassembly (10A) into contact with the mold (5);
curing the tire subassembly (10A) on the rim (20); and removing the tire and rim assembly (1) from the mold (5).

## Patentansprüche

1. Luftreifen (10), wobei der Reifen einen elastomeren Laufstreifen (12), mindestens eine Verstärkungslage (32) radial innen in Bezug auf den Laufstreifen (12) und zwei ringförmige, radial innere Felgenanbringungsenden (40) aufweist, wobei sich die Verstärkungslage (32) im Wesentlichen von einem Felgenanbringungsende (40) zum entgegengesetzten Felgenanbringungsende (40) erstreckt, wobei die Verstärkungslage eine geteilte Lage mit einem ersten Teil (32A) und einem zweiten Teil (32B) ist, wobei die Teile am Kronenbereich des Reifens geteilt sind, wobei sich der erste Teil (32A) und der zweite Teil (32B) überlappen, wenn sie am Mittelabschnitt (20A) montiert sind; **dadurch gekennzeichnet, dass** sich der erste Teil (32A) und der zweite Teil (32B) der mindestens einen Verstärkungslage (32) beim Aufpumpen während der Vulkanisation relativ zueinander verschieben, wodurch zugelassen wird, dass der Reifen die Form, wie sie in der Form hergestellt wird, annehmen kann.

2. Luftreifen (10) nach Anspruch 1, wobei die mindestens eine Verstärkungslage (32) einen dritten Lagenabschnitt (32C) aufweist, wobei der dritte Lagenabschnitt über dem ersten Teil (32A) und dem zweiten Teil (32B) zwischen den Felgenanbringungsenden liegt.

3. Luftreifen (10) nach Anspruch 1, wobei es eine Innenauskleidung (35) radial innen von und neben der mindestens einen Verstärkungslage gibt.

4. Luftreifen (10) nach Anspruch 3, wobei die Innenauskleidung (35) vorvulkanisiert ist.

5. Luftreifen (10) nach Anspruch 1, wobei mindestens ein Felgen-Anbringungsende (40) in Umfangsrichtung und radial ausdehnbar ist.

6. Luftreifen (10) nach Anspruch 5, wobei das mindestens eine Felgen-Anbringungsende (40) im Wesentlichen aus Elastomer besteht.

7. Luftreifen (10) nach Anspruch 5, wobei das mindestens eine Felgen-Anbringungsende (40) eine minimale Umfangslänge L im unbelasteten Zustand, wie in der Form hergestellt, aufweist, wobei die minimale Umfangslänge um ein Ausmaß von mindestens 10 % größer als die Länge L ohne permanente Verzerrung des Felgen-Anbringungsendes (40) ausdehnbar ist.

8. Schlauchloser Reifen- und Felgenaufbau (1), umfassend:
eine Felge (20) mit einem radial äußeren, ringförmigen Mittelabschnitt (20A), wobei der ringförmige Mittelabschnitt (20A) eine konturierte Außenfläche (21) mit einer vorbestimmten Umfangslänge LR und einer Konturbreite WR im wesentlichen normal zur Umfangslänge LR, eine Öffnung (60) zum Einspritzen von Fluiden oder Gasen durch den Mittelabschnitt (20A) hindurch, und zwei radial innere Felgenhörner (42) aufweist, wobei sich der ringförmige Mittelabschnitt (20A) radial über die beiden Felgenhörner (42) erstreckt;
einen schlauchlosen Reifen (10), wobei der schlauchlose Reifen (10) eine luftundurchlässige Innenauskleidung (35), mindestens eine Verstärkungslage (32) und zwei radial innere Felgen-Anbringungsenden (40) aufweist, und wobei der Reifen vor dem Vulkanisieren an die Felge angebaut wird, wobei mindestens eine Verstärkungslage (32) eine geteilte Lage ist, die sich von einem Reifenanbringungsende (40) zum entgegengesetzten Reifenanbringungsende (40) erstreckt und einen ersten Teil (32A) und einen zweiten Teil (32B) aufweist, wobei die Teile am Kronenbereich des Reifens geteilt sind, und wobei sich die Teile (32A) und (32B), wenn sie am Mittelabschnitt (20A) angebracht sind, überlappen, wobei der Reifen- und Felgenaufbau (1) **dadurch gekennzeichnet ist, dass** sich die Teile (32A) und (32B) beim Aufpumpen während der Vulkanisierung relativ zueinander verschieben, wodurch der Reifen die Form, wie sie in der Form hergestellt wird, annehmen kann.

9. Verfahren zum Aufbauen eines Reifen- und Felgenaufbaus, wobei das Verfahren die Schritte umfasst, dass:
eine Felge (20) bereitgestellt wird, wobei die Felge (20) einen ringförmigen Reifenaufbau-Mittelabschnitt (20A) aufweist, wobei der Mittelabschnitt (20A) eine konturierte Außenfläche (21) mit einer vorbestimmten Umfangslänge LR und einer vorbestimmten axialen und radialen Konturbreite WR und eine Öffnung (60) zum Einspritzen von Fluiden oder Gasen aufweist;
ein Reifen-Unteraufbau über dem Mittelabschnitt (20A) aufgebaut wird, indem eine luftundurchlässige Innenauskleidung (35) neben der konturierten Außenfläche (21) aufgelegt wird;
mindestens eine Verstärkungslagenschicht (32) über der Innenauskleidung und dem ringförmigen Mittelabschnitt (20A) aufgelegt wird, wobei die mindestens eine Verstärkungslagenschicht eine geteilte Lage mit einem ersten Teil (32A) und einem zweiten Teil (32B) ist, wobei sich die Teile (32A) und (32B), wenn sie montiert sind, axial überlappen,
wobei das Verfahren **dadurch gekennzeichnet ist, dass** sich die Teile (32A) und (32B) beim Aufpumpen während der Vulkanisierung relativ zueinander verschieben, wodurch zugelassen wird, dass der Reifen die Form des Formhohlraums annehmen kann.

10. Verfahren zum Aufbauen eines Reifen- und Felgenaufbaus nach Anspruch 9, mit den Schritten, dass:
mindestens zwei Gürtelverstärkungsstrukturen (36) über der mindestens einen Verstärkungslage (32) aufgelegt werden;
eine oder mehrere Elastomerbauteile auf den Reifen-Unteraufbau (10A) aufgelegt werden;
der Reifen-Unteraufbau (10A) entlang eines radial inneren Abschnitts der mindestens einen Verstärkungslage (32) und der Auskleidung (35) an den ringförmigen Mittelabschnitt geklemmt wird;
der Reifen/Felgen-Aufbau (1) in eine Form (5) eingesetzt wird;
Wärme und Druck auf die Form (5) und den Reifen/Felgen-Aufbau (1) durch die Öffnung (60) in dem ringförmigen Mittelabschnitt (20A) aufgebracht werden, wobei der Reifen-Unteraufbau nach außen ausgedehnt wird und somit der Reifen-Unteraufbau (10A) in Kontakt mit der Form (5) gedrückt wird;
der Reifen-Unteraufbau (10A) auf der Felge (20) vulkanisiert wird; und der Reifen- und Felgenaufbau (1) aus der Form (5) entfernt wird.

## Revendications

1. Bandage pneumatique (10), le bandage possédant une bande de roulement élastomère (12), au moins une nappe de renforcement (32) à l'intérieur de la bande de roulement (12) en direction radiale et une paire d'extrémités annulaires de fixation de jante (40) internes en direction radiale, la nappe de renforcement (32) s'étendant essentiellement depuis une extrémité de fixation de jante (40A) jusqu'à l'extrémité de fixation de jante opposée (40B), la nappe de renforcement étant une nappe en deux pièces possédant une première partie (32A) et une deuxième partie (32B), les parties étant séparées dans la zone de couronne du bandage pneumatique, la première partie (32A) et la deuxième partie (32B) se chevauchant lorsqu'elles sont montées sur la portion centrale (20A), **caractérisé en ce que**, après gonflage au cours de la vulcanisation, la première partie (32A) et la deuxième partie (32B) de ladite ou desdites nappes de renforcement (32) glissent l'une par rapport à l'autre pour permettre au bandage pneumatique de prendre la forme telle qu'elle se présente à l'état moulé.

2. Bandage pneumatique (10) selon la revendication 1, dans lequel ladite ou lesdites nappes de renforcement (32) possèdent une troisième portion de nappe (32C), la troisième portion de nappe recouvrant la première partie (32A) et la deuxième partie (32B) entre les extrémités de fixation de jante.

3. Bandage pneumatique (10) selon la revendication 1, dans lequel un calandrage intérieur (35) est disposé à l'intérieur en direction radiale de ladite ou desdites nappes de renforcement et en position adjacente à cette ou à ces dernières.

4. Bandage pneumatique (10) selon la revendication 3, dans lequel le calandrage intérieur (35) est soumis à une vulcanisation préalable.

5. Bandage pneumatique (10) selon la revendication 1, dans lequel au moins une extrémité de fixation de jante (40) est à même de s'élargir en direction circonférentielle et en direction radiale.

6. Bandage pneumatique (10) selon la revendication 5, dans lequel au moins une extrémité de fixation de jante (40) est essentiellement élastomère.

7. Bandage pneumatique (10) selon la revendication 5, dans lequel ladite ou lesdites extrémités de fixation de jante (40) possèdent une longueur circonférentielle minimale L à l'état non chargé tel que moulé, la longueur circonférentielle minimale L étant à même d'augmenter à concurrence d'au moins 10 % par rapport à ladite longueur L, sans soumettre les extrémités de fixation de jante (40) à une distorsion permanente.

8. Assemblage de bandage pneumatique sans chambre à air et de jante (1) comprenant :
une jante (20) possédant une portion centrale annulaire (20A) externe en direction radiale, la portion centrale annulaire (20A) possédant une surface externe profilée (21) possédant une longueur circonférentielle prédéterminée LR et une largeur de profil WR essentiellement perpendiculaire à la longueur circonférentielle LR, un orifice (60) pour injecter des fluides ou des gaz à travers la portion centrale (20A), une paire de rebords de jante internes en direction radiale (42), la portion centrale annulaire (26) s'étendant en direction radiale au-dessus de la paire de rebords de jante (42) ;
un bandage pneumatique sans chambre à air (10), le bandage pneumatique sans chambre à air (10) possédant un calandrage intérieur imperméable à l'air (35), au moins une nappe de renforcement (32), une paire d'extrémités de fixation de jante (40) internes en direction radiale, et dans lequel le bandage pneumatique est assemblé sur la jante avant la vulcanisation, ladite ou lesdites nappes de renforcement (32) étant une ou des nappes en deux pièces possédant une première partie (32A) et une deuxième partie (32B), les parties étant séparées dans la zone de couronne du bandage pneumatique, la première partie (32A) et la deuxième partie (32B) se chevauchant lorsqu'elles sont montées sur la portion centrale (20A), **caractérisé en ce que**, après gonflage au cours de la vulcanisation, la première partie (32A) et la deuxième partie (32B) glissent l'une par rapport à l'autre pour permettre au bandage pneumatique de prendre la forme telle qu'elle se présente à l'état moulé.

9. Procédé de confection d'un assemblage de bandage pneumatique de jante, le procédé comprenant les étapes consistant à :
procurer une jante (20), la jante (20) possédant une portion centrale annulaire (20A) de confection de bandage pneumatique, la portion centrale (20A) possédant une surface externe profilée (21) possédant une longueur circonférentielle prédéterminée LR et une largeur de profil WR essentiellement perpendiculaire à la longueur circonférentielle LR, un orifice (60) pour injecter des fluides ou des gaz ;
assembler un sous-assemblage de bandage pneumatique par-dessus la portion centrale (20A) en appliquant un calandrage intérieur imperméable à l'air (35) en position adjacente à la surface externe profilée (21) ;
appliquer au moins une nappe de renforcement (32) par-dessus le calandrage intérieur et par-dessus la portion centrale annulaire (20A), ladite ou lesdites nappes de renforcement étant une ou des nappes en deux pièces possédant une première partie (32A) et une deuxième partie (32B), les parties (32A) et (32B) se chevauchant en direction axiale à l'état monté,
le procédé étant **caractérisé en ce que**, après gonflage au cours de la vulcanisation, les parties (32A) et (32B) glissent l'une par rapport à l'autre pour permettre au bandage pneumatique d'épouser la forme de la cavité du moule.

10. Procédé de confection d'un assemblage de bandage pneumatique et de jante selon la revendication 9, comprenant les étapes consistant à :
appliquer au moins une paire de structures de renforcement de ceintures (36) par-dessus ladite ou lesdites nappes de renforcement (32) ;
appliquer un ou plusieurs composants élastomères sur le sous-assemblage de bandage pneumatique (10A) ;
serrer le sous-assemblage de bandage pneumatique (10A), le long d'une portion interne en direction radiale de ladite ou desdites nappes de renforcement (32) et du calandrage intérieur (35), à la portion centrale annulaire ;
placer l'assemblage de bandage pneumatique et de jante (1) dans un moule (5) ;
appliquer de la chaleur et de la pression sur le moule (5) et sur l'assemblage de bandage pneumatique de jante (1) à travers l'orifice (60) pratiqué dans la portion centrale annulaire (20A), en élargissant le sous-assemblage de bandage pneumatique vers l'extérieur afin de forcer le sous-assemblage de bandage pneumatique (10A) en contact avec le moule (5) ;
vulcaniser le sous-assemblage de bandage pneumatique (10A) sur la jante (20) ;
et retirer l'assemblage de bandage pneumatique et de jante (1) du moule (5).
